# EUROPÄISCHE PATENTSCHRIFT

(11) **EP 2 078 924 B1**
(45) Veröffentlichungstag und Bekanntmachung des Hinweises auf die Patenterteilung: **27.06.2012**
(21) Anmeldenummer: 08000302.3
(22) Anmeldetag: 09.01.2008
(51) Int. Cl.: G01B 21/26, G01M 17/007

(54) **Fahrzeugzentrierung im Fahrwerkeinstellstand und zugehöriges Verfahren**
Centring of automobiles during chassis adjustment and corresponding method
Centrage de véhicule dans l'état de réglage du châssis et procédé correspondant

(43) Veröffentlichungstag der Anmeldung: 15.07.2009
(73) Patentinhaber: SIEMENS AKTIENGESELLSCHAFT, 80333 München (DE)
(72) Erfinder: Hub, Thomas, 90587 Veitsbronn (DE)

(56) Entgegenhaltungen:
- WO-A-00/60308
- DE-U1- 20 105 929
- US-B1- 6 209 209

## Beschreibung

Die Erfindung betrifft eine Einrichtung zur Zentrierung eines Fahrzeugs in einem Prüfstand, der mindestens zwei Rollenpaare für die Vorderräder und/oder die Hinterräder aufweist, wobei wenigstens eine der beiden Rollen jedes Rollenpaares motorisch um die Längsachse bewegbar ist, mit einem Messsystem zur Messung der Position des Fahrzeugs. Weiterhin betrifft die Erfindung ein Verfahren zur Zentrierung eines Fahrzeugs in einem Prüfstand, wobei die Vorderräder und / oder die Hinterräder jeweils an einem Rollenpaar aufliegen, dessen eine der beiden Rollen motorisch um die Längsachse bewegt wird.

Eine Einrichtung der oben genannten Art zur Positionierung eines Fahrzeugs in einem Fahrwerkmessstand ist aus der DE 201 05 929 U1 bereits bekannt. Der Fahrwerkmessstand dient zur Messung und Einstellung der Geometrie von Radachsen von Rädern des Fahrzeugs. Die Räder sind jeweils zumindest mittelbar auf zwei Rollen lagerbar, von denen jeweils wenigstens eine motorisch in einer Rotation um die Längsachse der Rolle bewegbar ist. Zur Positionierung des Fahrzeugs in seitlicher Richtung ist wenigstens eine Rolle einer Radaufnahme wenigstens eines Rades jeder Achse des Fahrzeugs motorisch eintreibbar. Dabei ist die Radaufnahme jeweils um einen Drehpunkt drehbar gelagert. Die Radaufnahme ist durch eine Drehung um den Drehpunkt jeweils gegenüber der Radebene positionierbar.

Ein Verfahren der oben genannten Art zur Positionierung eines Fahrzeugs auf einem Fahrwerkmessstand ist ebenfalls der DE 201 05 929 U1 zu entnehmen.

Der Erfindung liegt die Aufgabe zugrunde, eine Einrichtung der oben genannten Art anzugeben, die die Zentrierung auf eine einfache Weise und mit geringem Aufwand ermöglicht. Weiterhin liegt der Erfindung die Aufgabe zugrunde, ein Verfahren der oben genannten Art anzugeben, das die Zentrierung des Fahrzeugs auf einfache Weise ermöglicht.

Die erste Aufgabe wird gelöst durch eine Steuerung, die an das Lenksystem des Fahrzeugs gekoppelt ist und zur Veränderung des Lenkeinschlags der Vorderräder und/oder der Hinterräder abhängig von Daten des Messsystems dient. Vorteilhafte Weiterbildungen der Erfindung sind den Unteransprüchen 2 und 3 zu entnehmen.

Die weitere Aufgabe wird durch das Verfahren mit folgenden Schritten gelöst:
a) mit einem Messsystem werden Daten zur Position des Fahrzeugs gemessen,
b) mit einer an das Lenksystem des Fahrzeugs gekoppelten Steuerung wird der Lenkeinschlag der Vorderräder und/oder der Hinterräder und damit die Position des Fahrzeugs verändert.

Ein Ausführungsbeispiel der Erfindung wird im Folgenden anhand einer Zeichnung näher erläutert.

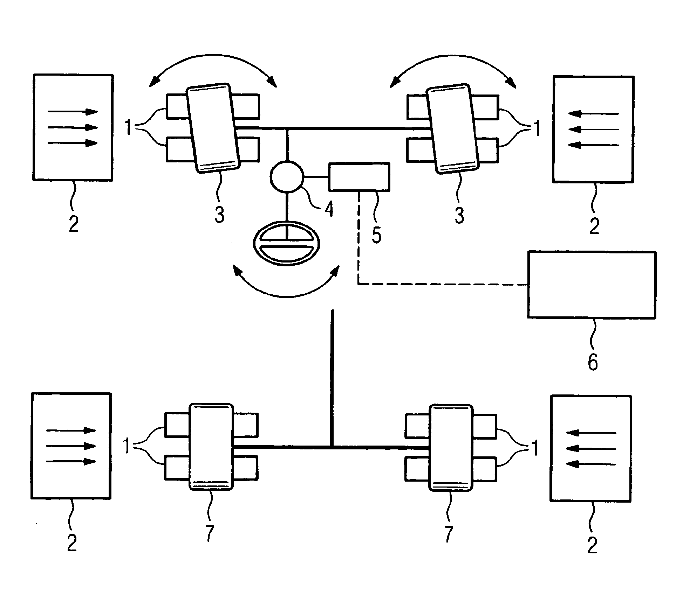

In der Zeichnung ist ein Prüfstand für ein Fahrzeug dargestellt. Der Prüfstand weist vier Rollenpaare 1 auf, denen jeweils eine Messsonde 2 eines Messsystems zur Messung der Position des Fahrzeugs zugeordnet ist. Auf zwei der Rollenpaare 1 liegen die Vorderräder 3 des Fahrzeugs auf, das bei dem vorliegenden Ausführungsbeispiel eine elektrische Lenkung 4 als Lenksystem aufweist. Über eine mit dem Lenksystem verbundene Steuerung 5 ist der Lenkeinschlag der Vorderräder 3 veränderbar. Da zumindest eine der beiden Rollen jedes Rollenpaars 1 für die Vorderräder 3 motorisch um die Längsachse bewegbar ist und hierüber das zugehörige Vorderrad angetrieben werden kann, ermöglicht dies eine Veränderung der Position und damit die Zentrierung des Fahrzeugs. Bei der vorliegenden erfindungsgemäßen Einrichtung zur Zentrierung des Fahrzeugs wird die Position des Fahrzeugs in einem geschlossenen Regelkreis verändert. Hierzu wird mit den Messsonden 1 die IstPosition gemessen und die gemessenen Daten von einer Auswerteeinheit 6 ausgewertet. Vorteilhafterweise vermessen die Messsonden 1 hierbei zur Ermittlung der Position des Fahrzeugs die vier Radhauskanten. Das Ergebnis der Auswertung wird an die Steuerung 5 weitergeleitet, die daraufhin das Lenksystem 4 mit einem entsprechenden Lenkeinschlag beaufschlagt. Die Position auf den Rollenpaaren 1 wird hierdurch soweit verändert, bis die gewünschte Zentrierung des Fahrzeugs erreicht ist.

Gemäß der Zeichnung liegen bei dem vorliegenden Ausführungsbeispiel die Hinterräder 7 auf den zwei weiteren Rollenpaaren 1 auf. Anstelle der Vorderräder 3 können die Hinterräder 7 mit einem Lenksystem ausgeführt sein. Wie oben beschrieben kann über eine Steuerung der Lenkeinschlag der Hinterräder 7 veränderbar sein, um in entsprechender Weise auch eine Zentrierung des Fahrzeugs über die Hinterräder 7 vorzunehmen.

Darüber hinaus ist auch die Ausführung möglich, bei der die Vorderradachse und die Hinterradachse zugleich Lenkachsen sind. In diesem Fall ist in der beschriebenen Weise die Zentrierung des Fahrzeugs über die Vorderräder 3 und die Hinterräder 7 zugleich möglich.

## Patentansprüche

1. Einrichtung zur Zentrierung eines Fahrzeugs in einem Prüfstand, der mindestens zwei Rollenpaare (1) für die Vorderräder (3) und/oder die Hinterräder aufweist, wobei wenigstens eine der beiden Rollen jedes Rollenpaares (1) motorisch um die Längsachse bewegbar ist, mit einem Messsystem (2) zur Messung der Position des Fahrzeugs,
**gekennzeichnet durch** eine Steuerung (5), die an das Lenksystem (4) des Fahrzeugs gekoppelt ist und zur Veränderung des Lenkeinschlags der Vorderräder (3) und/oder der Hinterräder abhängig von Daten des Messsystems (2) dient.

2. Einrichtung nach Anspruch 1,
**gekennzeichnet durch** eine Auswerteeinheit (6), die zur Auswertung der von dem Messsystem (1) empfangenen Daten bzgl. der Position und zur Weiterleitung des Ergebnisses der Auswertung an die Steuerung (5) dient.

3. Einrichtung nach Anspruch 1 oder 2,
**dadurch gekennzeichnet, dass** das Lenksystem (4) des Fahrzeugs elektrisch ausgeführt ist.

4. Verfahren zur Zentrierung eines Fahrzeugs in einem Prüfstand, wobei die Vorderräder (3) und/oder die Hinterräder jeweils auf einem Rollenpaar (1) aufliegen, dessen eine der beiden Rollen motorisch um die Längsachse bewegt wird,
**gekennzeichnet durch** folgende Schritte:
a) mit einem Messsystem (1) werden Daten zur Position des Fahrzeugs gemessen,
b) mit einer an das Lenksystem (4) des Fahrzeugs gekoppelten Steuerung (5) wird der Lenkeinschlag der Vorderräder (3) und/oder der Hinterräder und damit die Position des Fahrzeugs verändert.

5. Verfahren nach Anspruch 4,
**dadurch gekennzeichnet, dass** die vom Messsystem(1) aufgenommenen Daten ausgewertet werden und dass abhängig vom Ergebnis der Auswertung der Lenkeinschlag der Vorderräder (3) und/oder der Hinterräder durch die Steuerung (5)verändert wird.

## Claims

1. Device for centering a vehicle in a test stand that has at least two pairs of rollers (1) for the front wheels (3) and/or the rear wheels, it being possible to move at least one of the two rollers of each pair of rollers (1) by motor about the longitudinal axis, having a measurement system (2) for measuring the position of the vehicle, **characterized by** a controller (5) that is coupled to the steering system (4) of the vehicle and serves the purpose of varying the steering lock of the front wheels (3) and/or of the rear wheels as a function of data of the measurement system (2).

2. Device according to Claim 1, **characterized by** an evaluation unit (6) that serves to evaluate the data, received from the measurement system (2), relating to position, and to relay the result of the evaluation to the controller (5).

3. Device according to Claim 1 or 2, **characterized in that** the steering system (4) of the vehicle is of electrical design.

4. Method for centering a vehicle in a test stand, the front wheels (3) and/or the rear wheels in each case resting on a pair of rollers (1), one of the two rollers of said pair of rollers being moved by motor about the longitudinal axis, **characterized by** the following steps:
a) data relating to the position of the vehicle are measured with the aid of a measurement system (2) and
b) the steering lock of the front wheels (3) and/or of the rear wheels, and thus the position of the vehicle, are varied with the aid of a controller (5) coupled to the steering system (4) of the vehicle.

5. The method according to Claim 4, **characterized in that** the data picked up by the measurement system (2) are evaluated, and **in that** the steering lock of the front wheels (3) and/or of the rear wheels is varied by the controller (5) as a function of the result of the evaluation.

## Revendications

1. Dispositif de centrage d'un véhicule dans un banc d'essai, qui comporte au moins deux paires ( 1 ) de rouleaux pour les roues ( 3 ) avant et/ou les roues arrières, dans lequel l'un des deux rouleaux de chaque paire ( 1 ) de rouleaux est mobile autour de l'axe longitudinal par l'effet d'un moteur, comprenant un système ( 2 ) de mesure de la position du véhicule,
**caractérisé par** une commande ( 5 ), qui est couplée au système ( 4 ) de direction du véhicule et qui sert à modifier le braquage des roues ( 3 ) avant et/ou des roues arrières en fonction de données du système ( 2 ) de mesure.

2. Dispositif suivant la revendication 1,
**caractérisé par** une unité ( 6 ) d'exploitation, qui sert à l'exploitation des données ou de la position reçue par le système ( 1 ) de mesure et à acheminer le résultat de l'exploitation à la commande ( 5 ).

3. Dispositif suivant la revendication 1 ou 2,
**caractérisé en ce que** le système ( 4 ) de direction du véhicule est électrique.

4. Procédé de centrage d'un véhicule dans un banc d'essai, dans lequel les roues ( 3 ) avant et/ou les roues arrières s'appuient sur une paire de rouleaux, dont l'un des rouleaux est déplacé autour de l'axe longitudinal par l'effet d'un moteur,
**caractérisé par** les stades suivantes :
a) on mesure par un système ( 1 ) de mesure des données de position du véhicule,
b) par une commande ( 5 ) couplée au système ( 4 ) de direction du véhicule, on modifie le braquage des roues ( 3 ) avant et/ou des roues arrière et ainsi la position du véhicule.

5. Procédé suivant la revendication 4,
**caractérisé en ce qu'**on exploite les données enregistrées par le système ( 1 ) de mesure et on modifie, par la commande ( 5 ), le braquage des roues ( 3 ) avant et/ou des roues arrières en fonction du résultat de l'exploitation.
